# DEMANDE DE BREVET EUROPEEN

(11) **EP 4 417 995 A1**
(43) Date de publication de la demande: **21.08.2024**
(21) Numéro de dépôt: 23305208.3
(22) Date de dépôt: 16.02.2023
(51) Int. Cl.: G01S 5/00, G01S 13/87, G01S 19/38, G01S 5/14, G01S 13/76, H04B 7/204, H04W 64/00, H04W 84/00

(54) **POSITIONNEMENT D'UN TERMINAL COMMUNICANT AU SEIN D'UN RESEAU NON TERRESTRE UTILISANT UN AFFAIBLISSEMENT DE PRECISION CALCULE PAR LE RESEAU**

(71) Demandeur: THALES DIS FRANCE SAS, 92190 Meudon (FR); THALES, 92400 Courbevoie (FR)
(72) Inventeur: EL JAAFARI, Mohamed, 31100 TOULOUSE (FR); PANAITOPOL, Dorin, 92230 GENNEVILLIERS (FR); FINE, Jean-Yves, 13010 MARSEILLE (FR); RICHARD DE LATOUR, Antoine, 31100 TOULOUSE (FR); BLAUDIN DE THE, Yann, 31100 TOULOUSE (FR)
(74) Mandataire: Thomas, Christine Marie Catherine

(57) **Abrégé**

La présente invention concerne un procédé de gestion de la détermination du positionnement d'un terminal de communication ayant au moins un satellite non géostationnaire en vue et paraissant présent auprès d'un noeud de réseau, le procédé comprenant les étapes de, pour une entité du réseau :
- détermination d'un positionnement de référence du terminal ;
- calcul d'au moins une prédiction d'affaiblissement de précision calculée en fonction de données d'éphémérides du ou des satellites concernés pour au moins un instant à venir et du positionnement de référence du terminal ;
- comparaison de la prédiction d'affaiblissement avec un seuil maximal ;
- déclarer la détermination du positionnement non accessible en cas d'affaiblissement de précision prédit supérieur au seuil maximal ;
- sinon, envoyer au noeud de réseau et au terminal des instructions d'exécution d'une procédure de mesures multiples de temps aller-retour à l'instant à venir.

## Description

### DOMAINE TECHNIQUE

L'invention concerne le domaine des télécommunications par satellite, dans le cas d'une intégration d'un système satellitaire au réseau cellulaire de 5ième génération (5G), tel que spécifié par l'organisme de standardisation 3GPP.

Plus précisément l'invention concerne un procédé de gestion de la détermination du positionnement d'un terminal de communication ayant au moins un satellite non géostationnaire en vue.

L'invention concerne aussi une ou plusieurs entités de réseau, coeur de réseau (« core network » en anglais) et/ou réseau d'accès, mettant en oeuvre le procédé selon l'invention.

### ETAT DE LA TECHNIQUE ANTERIEURE

L'organisme 3GPP produit des normes définissant les besoins, l'architecture, le fonctionnement du système de communication mobile. Les premiers éléments normatifs en relation avec le système satellitaire, i.e. géostationnaire, orbite basse, orbite moyenne, ont été définis en 2021 dans le cadre de la Release-17 3GPP et le travail continue, pour des systèmes en place dans les années à venir.

L'architecture et les procédures inhérentes au réseau 5G est spécifiée dans les normes TS 23.501, TS 23.502 et rattachées. L'architecture du service de localisation dans le coeur de réseau 5G est défini dans la norme TS 23.273. La fonction de positionnement est définie au niveau du réseau d'accès dans la spécification TS 38.305 (« NG Radio Access Network (NG-RAN); Stage 2 functional spécification of User Equipment (UE) positioning in NG-RAN »).

Selon les développements envisagés, un ensemble de satellites, gérés par un centre de contrôle satellitaire, va fournir une couverture de téléphonie mobile 5G et ainsi servir de réseau d'accès, seul ou en complément d'un réseau terrestre, vers un coeur de réseau administré par l'opérateur de téléphonie mobile, coeur de réseau qui va mettre en oeuvre les différentes fonctions inhérentes à ce réseau : sécurité, gestion de la mobilité, facturation, etc...

Pour satisfaire aux contraintes de services régulés, tels l'interception légale ou les services d'urgences, et compte tenu des spécificités des cellules satellitaires, bien plus grandes que les cellules générées par les stations de base du réseau terrestre, il est nécessaire que le réseau mette en place des procédures de vérification de la localisation annoncée par le terminal, pour s'assurer que celui-ci soit bien en position de recevoir ces services régulés.

Il n'est pas nécessaire que la précision de localisation par le réseau atteigne la précision de localisation obtenue par le terminal via des systèmes dédiés (GNSS) mais elle devra permettre d'assurer que les mesures remontées par le terminal sont intègres, avec une précision de détermination de quelques kilomètres (i.e. ≤10 km).

Plus précisément, dans le cadre de la Release-18 en cours de normalisation, sous la dénomination Work Item « NW UE Verified Location », les différents groupes de travail comme RAN1, RAN2, RAN3 en charge de la normalisation du réseau d'accès radio (RAN) étudient les procédés possibles de localisation du terminal par le réseau satellitaire et arrivent à la conclusion qu'il faut utiliser en priorité la procédure multi-RTT (i.e. multi-Round-Trip Time, soit, en français, temps aller-retour multiple).

Cependant, ainsi que détaillé dans RP-223534 « Revised WID NR NTN (Non-Terrestrial Networks) enhancements », des améliorations seront nécessaires à la détermination de la localisation du terminal avec un seul satellite en vue, configuration qui constitue une contrainte majeure à satisfaire dans le cadre d'un constellation LEO pour laquelle il n'est pas possible de toujours considérer plusieurs satellites en vue d'un terminal.

En effet, avec un seul satellite en vue, la disposition des positions des satellites sur l'orbite, i.e. la géométrie des satellites et la répartition des points de positionnement/ancrage des satellites pour le positionnement, affecte la précision du positionnement.

La localisation du terminal par le réseau dans le cas 5G NTN avec un seul ou plusieurs satellite(s) du système 5GS est en cours de définition et il est requis que la vérification de la position du terminal par le réseau se fasse avec une précision telle que documentée dans la clause « recommandations » de la 3GPP TR 38.882, c'est-à-dire avec une granularité de 10 km.

Il existe aujourd'hui un besoin pour une solution efficace et simple pour vérifier la localisation du terminal et adresser, en particulier, la situation où un seul satellite est en vue du terminal.

### EXPOSE DE L'INVENTION

La présente invention vise à permettre une vérification et/ou une détermination du positionnement du terminal de manière optimale.

La présente invention concerne un procédé de gestion de la détermination du positionnement d'un terminal de communication ayant au moins un satellite non géostationnaire en vue et paraissant présent auprès d'un noeud de réseau, le procédé comprenant les étapes de, pour une entité du réseau :
- détermination d'un positionnement de référence du terminal ;
- calcul d'au moins une prédiction d'affaiblissement de précision calculée en fonction de données d'éphémérides du ou des satellites concernés pour au moins un instant à venir et du positionnement de référence du terminal ;
- comparaison de la prédiction d'affaiblissement avec un seuil maximal ;
- déclarer la détermination du positionnement non accessible en cas d'affaiblissement de précision prédit supérieur au seuil maximal ;
- sinon, envoyer au noeud de réseau et au terminal des instructions d'exécution d'une procédure de mesures multiples de temps aller-retour à l'instant à venir.

L'invention assure que les mesures de temps aller-retour multiples se feront dans une situation géométrique offrant la possibilité d'obtenir un résultat acceptable. En effet, il ne sert à rien de demander à NG-RAN de déterminer la position exacte de l'UE et ainsi de solliciter si la géométrie système ne le permet pas. Mise en oeuvre par le réseau, le procédé selon l'invention permet ainsi la vérification/validation du positionnement du terminal par le réseau.

On rappelle ici que les communications impliquant le réseau non-terrestre font appel soit à un satellite transparent, soit à un satellite régénératif. Aussi les mesures multi-RTT font appel, de manière connue, aux pilotes Positioning Référence Signals (PRS) pour le protocole NRPPa utilisé du côté du noeud de réseau et aux pilotes Sounding Référence Signals (SRS) pour le protocole LPP utilisé du côté du terminal.

L'invention pourra être déployée sur tous les réseaux de 5ieme génération disposant d'un accès possible par réseau satellitaire et qui souhaiteraient intégrer un procédé efficace de vérification de la position du terminal par le réseau.

L'invention propose ainsi d'utiliser la métrique constituée par la notion d'affaiblissement (ou dilution) de la précision (G)DOP, pour (Géométrie) Dilution Of Précision en anglais, pour détecter si la situation rencontrée permettra d'obtenir un positionnement fiable sans marge d'erreur dissuasive. Cette métrique est utilisée dans les systèmes GPS.

De multiples documents de l'art antérieur décrivent le calcul d'affaiblissement de précision. Il s'agit d'un indicateur qui caractérise l'influence de la géométrie des satellites au moment des mesures du positionnement. Dans une approche de simplification, l'affaiblissement de précision est proportionnel à l'inverse du volume du polyèdre formé par le terminal (UE) et les satellites en visibilité. Ainsi plus le volume sera important, plus l'affaiblissement de précision DOP sera faible. Il se décompose en réalité en plusieurs indicateurs PDOP, VDOP, HDOP, et TDOP, qui traduisent respectivement la qualité du positionnement vertical, horizontal et l'influence de la synchronisation des satellites (temps) sur la mesure.

Pour mémoire, GDOP signifie "dilution/affaiblissement géométrique de la précision" et désigne l'incertitude de tous les paramètres : latitude, longitude, hauteur et décalage d'horloge. Elle s'interprète grossièrement comme le rapport entre l'erreur de position et l'erreur de distance/RTT. HDOP est l'affaiblissement horizontal de la précision. VDOP est l'affaiblissement vertical de la précision. PDOP est l'affaiblissement de la précision de la position calculée sur un volume géométrique (3D), ne tenant pas compte du décalage d'horloge.

Un exemple de document décrivant l'affaiblissement de précision est l'article « Dilution of Précision » de Richard B. Langley de l'Université du New Brunswick paru dans GPS World en mai 1999.

On note ici que, par satellite en vue, on désigne un satellite disponible pour communiquer avec le terminal. Il est ainsi possible que de nombreux satellites soient géographiquement en vue du terminal mais que celui-ci n'ait pas les droits ou les caractéristiques lui permettant de communiquer avec ceux-ci.

Avantageusement, la prédiction d'affaiblissement de précision est la prédiction d'affaiblissement de précision de position.

Cette métrique d'affaiblissement de précision de position PDOP offre l'avantage de donner une évaluation de la précision de mesure attendue pour un volume et de pouvoir être calculée sans prise en compte du décalage d'horloge qui n'est pas nécessairement disponible dans le cadre de l'invention et/ou qui, en outre, n'est pas nécessaire pour le procédé selon l'invention.

Selon un mode de réalisation avantageux, l'étape de calcul comprenant le calcul de plusieurs prédictions d'affaiblissement de précision, les prédictions étant calculées en fonction de données d'éphémérides du ou des satellites concernés pour un ou plusieurs instants à venir et du positionnement de référence, le procédé comprend les étapes de :
- comparaison des prédictions d'affaiblissement de précision entre elles et avec le seuil maximal ;
- déclarer la détermination du positionnement non accessible en cas d'affaiblissements de précision prédits tous supérieurs au seuil maximal ;
- sinon, déterminer un ou plusieurs instants à venir offrant un affaiblissement de précision minimale ;
- envoyer au noeud de réseau et au terminal des instructions d'exécution d'une procédure de mesures multiples de temps aller-retour à l'instant ou les instants déterminés.

L'invention propose ainsi d'optimiser des instants de prise de mesure par le ou les satellites en fonction de la configuration géométrique du ou des satellites et du terminal, pour donner des instructions optimales au terminal et au noeud de réseau gNB/NG-RAN pour l'implémentation et la remontée de mesures multiples de temps aller-retour.

En comparant plusieurs prédictions d'affaiblissement pour plusieurs situations à venir, l'invention permet une optimisation de la précision des mesures du positionnement du côté du réseau et permet d'identifier les cas où la détermination de la position du terminal par des méthodes de localisation dépendantes seulement du réseau d'accès radio n'est pas possible. Avec l'invention, les mesures sont faites dans les conditions optimales car elle permet de rechercher et de déterminer les instants propices à la prise d'une mesure de temps aller-retour permettant de minimiser cette dilution/affaiblissement de la précision.

Selon une réalisation de l'invention, au moins trois satellites étant en vue du terminal, l'étape de calcul comprend le calcul de plusieurs prédictions d'affaiblissement de la précision réalisées pour plusieurs instants différents de mesures de temps aller-retour simultanées auprès d'au moins un triplet de satellites en vue du terminal, les instants différents de mesures différentiant les prédictions entre elles.

Cette réalisation utilisant une prise de mesures simultanées de temps aller-retour auprès de plusieurs satellites permet d'optimiser l'instant où ces mesures simultanées sont effectuées.

Selon une autre réalisation, un satellite étant en vue du terminal, les prédictions sont calculées pour trois instants de mesures de temps aller-retour séparés par plusieurs intervalles de temps différents, les intervalles de temps différents différentiant les prédictions entre elles.

Cette réalisation adresse les situations où moins de trois satellites sont en vue du terminal, ne pouvant ainsi pas définir un volume géométrique permettant de calculer une prédiction d'affaiblissement. Ainsi, par exemple, lorsqu'un seul satellite est en vue du terminal, pour un faisceau avec empreinte fixe semi-permanente au sol, l'invention permet d'établir une chronologie particulière des prises de mesures pour que le recoupement des mesures multiples de temps aller-retour soit possible. Le volume est ainsi obtenu dans le temps avec trois mesures à trois instants. Cela est possible sauf dans certains cas tels qu'avec le terminal situé dans le plan orbital du satellite.

Ainsi l'invention permet soit d'établir une chronologie optimale des mesures au sens GDOP dans le cas d'un seul satellite, soit de choisir les satellites les mieux positionnés de la constellation dans le cas multi satellite, soit de ne pas faire de mesure qui n'apporterait rien.

Selon une caractéristique particulière, l'étape de détermination d'un positionnement de référence comprend une sous-étape de récupération d'un positionnement annoncé par le terminal, la détermination du positionnement de référence étant réalisée en fonction de ce positionnement annoncé.

Avec cette caractéristique, le procédé selon l'invention permet de vérifier la véracité du positionnement annoncé par le terminal.

Selon une autre caractéristique particulière de l'invention, l'étape de détermination d'un positionnement de référence comprend une sous-étape de choix d'un satellite dans le faisceau duquel le terminal est supposé être présent et une sous-étape de détermination du centre de la cellule formée au sol par le faisceau, ce centre de la cellule définissant le positionnement de référence du terminal.

Un tel point de référence permet, après avoir détecté la présence du terminal dans la cellule concernée, d'effectuer une évaluation des instants et/ou intervalles de mesures optimaux pour une détermination satisfaisante du positionnement du satellite. Cette réalisation est particulièrement utile quand le terminal n'a pas fourni son positionnement au réseau.

L'invention concerne aussi une entité de réseau adaptée à l'implémentation d'un procédé de gestion de la détermination du positionnement d'un terminal de communication ayant au moins un satellite non géostationnaire en vue et paraissant présent auprès d'un noeud de réseau selon l'une des revendications précédentes, l'entité de réseau, étant apte à déterminer un positionnement de référence du terminal, comprend un module de calcul d'au moins une prédiction d'affaiblissement de précision calculée en fonction de données d'éphémérides du ou des satellites concernés pour au moins un instant à venir et du positionnement de référence du terminal et un module de décision d'envoi au terminal d'instructions d'exécution d'une procédure de mesures multiples de temps aller-retour à au moins un instant à venir, le module de décision étant apte à comparer la prédiction d'affaiblissement avec un seuil maximal, à déclarer la détermination du positionnement non accessible en cas d'affaiblissement de précision prédit supérieure au seuil maximal et, sinon, à déclencher l'envoi au noeud de réseau et au terminal des instructions d'exécution d'une procédure de mesures multiples de temps aller-retour à l'instant à venir.

L'invention propose une fonction originale, et inconnue jusqu'à présent, au sein d'un réseau de nouvelle génération apte à fonctionner avec une constellation satellitaire. Avec l'invention, le réseau devient apte à vérifier le positionnement d'un terminal sans saturer les communications, les mesures n'étant faites qu'à bon escient.

Dans un mode réalisation avantageux, le module de calcul étant apte à calculer plusieurs prédictions d'affaiblissement de précision, les prédictions étant calculées en fonction de données d'éphémérides du ou des satellites concernés pour un ou plusieurs instants à venir et du positionnement de référence, le module de décision étant, quant à lui, apte à comparer des prédictions d'affaiblissement de précision entre elles et avec le seuil maximal, à déclarer la détermination du positionnement non accessible en cas d'affaiblissements de précision prédit toutes supérieures au seuil maximal et, sinon, à déterminer un ou plusieurs instants à venir offrant un affaiblissement de précision minimale, et à déclencher l'envoi au noeud de réseau et au terminal des instructions d'exécution d'une procédure de mesures multiples de temps aller-retour à l'instant ou les instants déterminés.

Une telle entité de réseau permet d'optimiser la prise de mesures. La situation à venir la plus favorable est ainsi choisie parmi plusieurs prédictions.

Selon un premier mode de réalisation, cette entité de réseau appartient au coeur de réseau.

Ce mode de réalisation implique des échanges d'éphémérides additionnels pour la mise en oeuvre de l'invention mais a l'avantage de centraliser la décision d'instructions de prise de mesures multiples de temps aller-retour. La fourniture d'éphémérides engendre alors des échanges spécifiques à la réalisation décrits dans la description détaillée.

Ainsi, dans un mode de réalisation préféré, cette entité de réseau est une fonction de gestion du positionnement comprenant un module de réception, de traitement et de stockage d'éphémérides des satellites pour les fournir au module de calcul des prédictions d'affaiblissement.

Cette fonction, connue par ailleurs au sein du coeur de réseau pour l'envoi des requêtes de mesures multiples de temps aller-retour, acquière une fonctionnalité additionnelle avec l'invention.

Selon un second mode de réalisation, cette entité de réseau appartient au réseau d'accès.

Une telle entité du réseau d'accès a alors accès aux éphémérides des satellites mais cependant n'est pas responsable des envois d'instructions de prise de mesures multiples de temps aller-retour. Cela nécessite cependant des échanges spécifiques avec le coeur de réseau ainsi que cela est décrit en détail dans la description détaillée.

Avantageusement, l'entité de réseau d'accès est un noeud de réseau NG-RAN (Next Génération - Radio Access Network).

Il peut s'agir notamment d'un noeud gNB (next génération NodeB) pour la station de base ou d'un point de transmission radio (TRP pour transmission radio point en anglais) dans le cas d'un satellite régénératif.

Dans tous les cas, une entité de réseau selon l'invention permet de réaliser au moins une partie des étapes du procédé selon l'invention. En effet, il pourrait être envisagé qu'une ou des étapes soient sous-traitées par une entité de réseau à une autre sans que cela ne se départisse des principes de l'invention. L'entité de réseau implémente aussi avantageusement toutes les caractéristiques telles que ci-dessus décrites pour le procédé selon l'invention.

De manière générale, il est noté ici que les différentes caractéristiques et modes de réalisation/fonctionnement peuvent être implémentés seul ou en association ou juxtaposition avec l'un(e) ou l'autre des caractéristiques et modes de réalisation ainsi que revendiqués. Un mode de réalisation peut donc être implémenté concomitamment avec un autre en fonction des situations rencontrées. Cela permet notamment de traiter des situations différentes selon le contexte ou besoin rencontré. En particulier, il est clair que les deux modes de réalisations où le calcul est réalisé par le noeud de réseau ou par la fonction de gestion de positionnement peuvent être implémentés en parallèle ou séparément pour répondre à des besoins distincts.

En fait, de préférence, le calcul d'affaiblissement de précision sera réalisé par la fonction de gestion de localisation dès lors que les données sur les éphémérides sont disponibles/accessibles à cette fonction. Dans certaines conditions, on pourrait envisager, qu'en cas d'impossibilité, ponctuelle ou non, de communiquer les éphémérides, d'implémenter ce calcul d'affaiblissement de précision au niveau de la station de base (noeud de réseau d'accès radio) qui, pour sa part, a toujours les éphémérides à sa disposition.

Ipso facto, la fonction de gestion de localisation pourrait sous-traiter cette tâche au noeud de réseau de façon permanente ou d'une façon temporaire si la fonction de gestion de localisation n'a pas d'information fraiche sur les éphémérides pendant un moment. Le procédé selon l'invention pourrait ainsi être réalisé de manière hybride, donc en partie par la fonction de gestion de localisation et en partie par le noeud de réseau. Cela est une implémentation envisagée selon l'invention.

On note aussi ici que les revendications ont été centrées sur le procédé de gestion de la détermination du positionnement d'un terminal. Il va sans dire que toute revendication d'une autre catégorie, par exemple visant une autre entité de réseau réalisant les étapes du procédé avec ces mêmes caractéristiques et comportements est à considérer comme étant décrite dans la présente demande et pouvant être ultérieurement revendiqué en tant que tel.

Il en est de même concernant l'entité de réseau selon l'invention qui peut par ailleurs présenter toutes les caractéristiques et comportements/configurations tels que revendiquées pour le procédé selon l'invention et ces caractéristiques et comportements/configurations pourront ultérieurement être revendiqués en tant que tels. En particulier les caractéristiques relatives à l'utilisation d'un seul satellite ou de plusieurs satellites concernent également les entités de réseau selon l'invention et peuvent être des caractéristiques ultérieurement revendiquées.

Pour la réalisation des objectifs précédents et des objectifs connexes, un ou plusieurs modes de réalisation comprennent les caractéristiques décrites ci-après de manière complète et détaillée.

### BREVE DESCRIPTION DES DESSINS

La description suivante et les dessins annexés exposent en détail certains aspects illustratifs et ne représentent que quelques-unes des diverses manières dont les principes de l'invention peuvent être employés. D'autres avantages et caractéristiques nouvelles apparaîtront dans la description détaillée suivante, lorsqu'ils seront considérés conjointement avec les dessins, et les modes de réalisation divulgués sont destinés à inclure tous ces aspects et leurs équivalents.
- La figure 1 montre schématiquement la précision obtenue au sein d'une cellule formée au sol par le faisceau d'un seul satellite pour une seule mesure de temps aller-retour;
- La figure 2 est un diagramme de temps illustrant un premier mode de réalisation d'un procédé selon l'invention ;
- La figure 3 illustre schématiquement la procédure de mesures multiples de temps aller-retour utilisée par l'invention dans le cas d'un unique satellite en vue du terminal ;
- La figure 4 est un diagramme de temps illustrant la récupération, par la fonction LMF, de données relatives au positionnement de(s) satellite(s) nécessaire(s) à la mise en oeuvre de l'invention ;
- La figure 5 est un diagramme de temps illustrant en détail les échanges pour le premier mode de réalisation de l'invention ;
- La figure 6 est un diagramme de temps illustrant en détail les échanges pour le second mode de réalisation de l'invention ;
- La figure 7 illustre un exemple de l'influence de la géométrie reliant le terminal et les points satellitaires de transmission radio.

### DESCRIPTION DETAILLEE DES FIGURES ET DES MODES DE REALISATION

Pour une compréhension plus complète de l'invention, celle-ci va maintenant être décrite en détail en référence aux figures ci-jointes. La description détaillée illustrera et décrira ce qui est considéré comme un mode de réalisation préféré de l'invention. Il faut bien sûr comprendre que diverses modifications et changements de forme ou de détail pourraient facilement être apportées sans s'écarter de la portée de l'invention. Il est donc prévu que l'invention ne soit pas limitée à la forme et aux détails exacts montrés et décrits ici, ni à rien de moins que l'ensemble de l'invention divulguée ici et revendiquée ci-après. Les mêmes éléments ont été désignés par les mêmes références dans les différents dessins. Pour des raisons de clarté, seuls les éléments et les étapes qui sont utiles à la compréhension de la présente invention ont été montrés dans les dessins et seront décrits.

L'invention utilise la procédure de mesure de temps aller-retour, connue sous l'acronyme RTT, Round-Trip Time en anglais, se base sur l'analyse du temps de propagation entre deux points de communication et peut utiliser des signaux radio spécifiques, e.g. par exemple signaux pilotes, signaux de référence et/ou signaux de préambules d'accès radio.

Compte tenu des précisions du système et des erreurs de mesures du timing UpLink(UL)/DownLink(DL), i.e. en voie montante entre le UE et un noeud gNB et/ou en voie descendante entre un noeud gNB et l'UE, cette procédure conduit à déterminer une bande dans laquelle peut se trouver un terminal UE donné d'après notamment un ou plusieurs temps de propagation et/ou une ou plusieurs différences de temps de propagation entre le terminal UE et un ou plusieurs points d'accès, e.g. stations de base, connues sous l'acronyme gNBs.

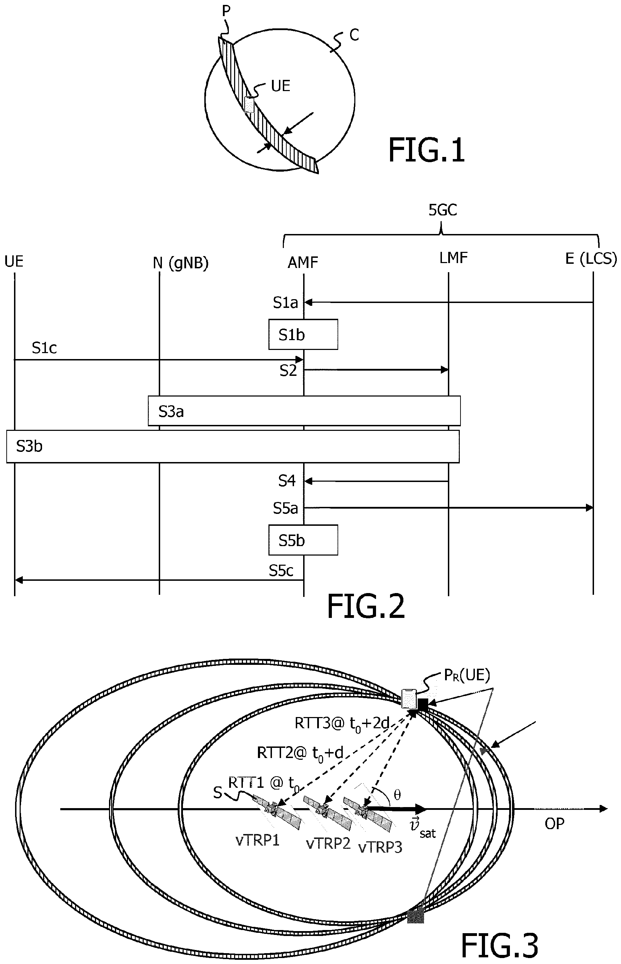

La figure 1 illustre la précision d'une mesure unique de temps aller-retour avec un satellite pour un terminal UE présent dans une cellule C formée au sol par un faisceau d'un satellite étant en vue du terminal UE. Typiquement, les tailles d'une cellule pour les satellites non géostationnaires sont, pour les orbites terrestres basses à 1200 km d'altitude (LEO 1200), de 90 km et, pour les orbites terrestres basses à 600 km d'altitude (LEO 600), de 50 km respectivement.

Sur la figure 1, une bande P hachurée illustre l'erreur de mesure observée pour une unique mesure de temps aller-retour (RTT dans la suite) avec un seul satellite. La largeur de cette bande est de 60 mètres environ, ce qui correspond à une erreur de mesure RTT de 200 nanosecondes.

Pour améliorer la précision de localisation le réseau satellitaire va procéder à plusieurs mesures consécutives et procéder par recoupement des zones de localisation possibles. Dans ce cas, c'est l'intersection de plusieurs anneaux qui détermine la précision finale.

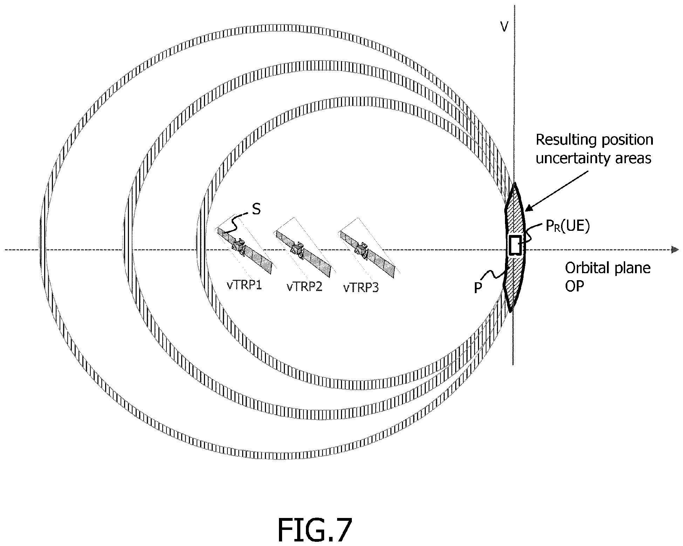

La figure 7 montre un exemple de l'influence de la géométrie reliant le terminal et les positions du satellite au moment des mesures du positionnement sur la précision de positionnement. Dans cet exemple, le terminal est situé sur le plan orbital OP, ou à proximité de celui-ci et dans un plan V perpendiculaire au plan orbital OP. Si les trois mesures RTT étaient faites avant le passage du satellite S par le plan V, la bande hachurée P, qui représente la zone de localisation possible définie par le recoupement des trois zones de localisation possibles, serait extrêmement large. Cela ne permet pas de facto de déterminer, ni de vérifier la position du terminal.

La procédure multi-RTT peut être utilisée dans les deux cas de figures prévues par le 3GPP, à savoir cellule défilante par rapport au sol et cellule fixe au sol pendant le temps de passage du satellite.

L'invention améliore la gestion des prises de mesures multiples de temps aller-retour.

La figure 2 montre schématiquement l'échange de signalisation entre un terminal UE et les entités d'un réseau pour la localisation de l'UE tel que défini dans la spécification technique TS 38.305. Les entités de réseau impliquées dans ces échanges comprennent des entités E du coeur de réseau 5GC (pour 5G Core en anglais) proposant un service de localisation ou positionnement, (désigné sous l'acronyme LCS pour Location Services en anglais, dans les documents standardisés), une fonction de gestion du positionnement LMF du coeur de réseau 5GC, une fonction de gestion d'accès et de mobilité AMF du coeur de réseau 5GC et un noeud gNB de réseau NG-RAN avec lequel le terminal est connecté ou duquel le terminal est susceptible d'être dans le périmètre.

On rappelle ici les notions de satellites transparents, qui répètent les signaux reçus d'une station de base au sol, potentiellement après une conversion RF, et de satellites régénératifs implémentant tout ou juste une partie de la pile protocolaire d'un noeud gNB. Ainsi, sur la figure 2, le noeud N du réseau 5G peut se trouver au sol, soit une station de base terrestre, ou à bord d'un satellite, et être ainsi un point de transmission radio TRP (pour Transmission Radio Point en anglais) implémentant tout ou partie de la pile protocolaire gNB.

La fonction de gestion du positionnement (LMF) est l'entité de réseau du réseau central 5G (5GC) qui prend en charge les fonctionnalités suivantes de détermination de l'emplacement d'un UE, d'obtention des mesures de localisation (i.e. mesures qui servent à localiser le UE) en liaison descendante ou une estimation de la localisation par le terminal UE, d'obtention de mesures de localisation (i.e. de mesures qui servent à localiser le UE) sur la liaison montante par le NG-RAN, d'obtention de données d'assistance non associées au terminal UE par le réseau NG-RAN. La fonction LMF est connectée avec le terminal UE en utilisant le protocole LPP, mais aussi avec le réseau NG-RAN en utilisant le protocole NRPPa. Typiquement les deux protocoles LPP et NRPPa sont utilisés d'une manière conjointe pour le multi-RTT, pour transmettre, respectivement, des mesures effectuées en voie descendante par le terminal UE et en voie montante par le réseau NG-RAN.

Sur l'exemple de la figure 2, soit une entité E (5GC LCS) requiert un service de positionnement auprès de la fonction de gestion d'accès et de mobilité AMF (cas S1a), soit la fonction AMF détermine le besoin d'un service de localisation, par exemple, pour localiser le terminal UE pour un appel d'urgence (cas S1b), soit le terminal UE demande un service de localisation, par exemple, le positionnement ou la fourniture de données d'assistance, à la fonction AMF (cas S1c). La fonction AMF transfère alors la demande de service de localisation à la fonction de gestion du positionnement LMF dans une étape S2.

La fonction de gestion du positionnement LMF effectue des procédures avec le noeud de réseau N (NG-RAN) et avec le terminal UE dans deux étapes S3a et S3b. A la suite de ces procédures la fonction de gestion du positionnement LMF répond à la fonction de gestion d'accès et de mobilité AMF dans une étape S4, cette réponse comprenant une information de positionnement du terminal UE. La réponse est transmise à l'entité E (5GC LCS) dans une étape S5a (cas S1a) ou traitée par la fonction de gestion d'accès et de mobilité AMF dans une étape S5b (cas S1b) ou, dans une étape S5c (cas S1c), la fonction AMF envoie une réponse de service de localisation au terminal UE et inclut tous les résultats nécessaires, par exemple une estimation de localisation pour l'UE.

Ce type de protocole qui gère les échanges entre le LMF et le gNB est donc connu sous le nom de flux NRPPa, pour « NR Positioning Protocol A » en anglais, cf. TS 38.455 et TS 38.305, et celui qui gère les échanges entre la fonction LMF et le terminal UE est connu sous le nom de LPP, pour « LTE Positioning Protocol » cf. TS 37.355.

L'invention enrichit les échanges de ce protocole NRPPa. Elle implémente plusieurs prédictions d'affaiblissement de précision, les prédictions étant calculées en fonction de données d'éphémérides du ou des satellites en vue du terminal.

Selon l'invention, le calcul des prédictions est réalisé par une entité du réseau. Différents modes de réalisation sont ainsi possibles.

Dans un premier mode de réalisation, les calculs sont réalisés par la fonction de gestion du positionnement LMF.

Un prérequis de ce mode de réalisation est la connaissance des éphémérides du ou des satellites en vue du terminal.

Selon une première implémentation, la fonction de gestion du positionnement LMF est connectée au centre de contrôle du réseau de satellite, NCC pour « Network Control Center » en anglais, pour disposer des éphémérides de la constellation. La fonction LMF peut ainsi prédire des valeurs d'affaiblissement de précision pour plusieurs positions attendues pour le ou les satellites en vue, ces positions étant déterminées à l'aide des éphémérides selon des méthodes de prédiction des positions successives du ou des satellites en fonction du temps connues par ailleurs. Les positions prédites sont désignées sous le terme de points de transmission radio virtuel vTRP.

Le calcul de plusieurs prédictions est illustré sur la figure 3 dans le cas d'un seul satellite S se déplaçant sur son plan orbital OP à une vitesse vₛₐₜ. Trois positions successives vTRP1, vTRP2, vTRP3 prédites pour les instants t₀, t₀+d et t₀+2d sont représentées sur la figure 3. Un positionnement de référence P_{R}(UE) du terminal UE est par ailleurs utilisée pour le calcul d'affaiblissement de précision. Un tel calcul est connu par ailleurs, il est basé sur le volume formé par les quatre points P_{R}(UE), vTRP1, vTRP2 et vTRP3.

Dans la suite est décrit le cas illustratif où un seul satellite est en vue du terminal UE qui est le cas le moins favorable par rapport aux situations où plusieurs satellites sont disponibles.

Les trois instants de prédiction successifs pour le même satellite sont ainsi séparés régulièrement d'un intervalle de temps d. Selon l'invention, plusieurs triplets de positions successives prédites pour lesquels les intervalles seront chaque fois différents sont utilisés. Ainsi des prédictions d'affaiblissement de précision sont calculées pour plusieurs triplets où les instants sont plus ou moins séparés l'un de l'autre.

On note ici que trois instants de prédiction sont un minimum pour définir un volume. Cependant cela n'exclut pas l'utilisation de davantage d'instants de prédictions pour définir un volume servant de base pour le calcul de la diffusion de précision.

On remarque ici aussi que la figure 3 présente non seulement trois positions virtuelles prédites du satellite à trois instants différents mais peut illustrer également la prise de trois mesures de temps aller-retour RTT1, RTT2 et RTT3 qui sera effectuée si le triplet décrit sur la figure 3 (donc avec des intervalles de temps entre les prises de mesures de d) est sélectionné pour la prise de mesures dont l'instruction sera donnée au terminal.

On note ici encore que les premiers instants de mesure de chaque triplet sont nécessairement légèrement décalés dans le temps par rapport à l'instant auquel est commencé le procédé selon l'invention. Cet intervalle doit être suffisant pour permettre la réalisation du procédé et la prise en compte des instructions de prise de mesures par le terminal.

Revenant à la description du premier mode de réalisation où le LMF réalise les calculs d'affaiblissements de précision, notée DOP dans la suite, cette dernière fonction, ayant eu accès aux éphémérides et donc aux futures positions du ou des satellites en fonction du temps, calcule plusieurs valeurs d'affaiblissement de précision en fonction des positions prédites.

La fonction LMF, grâce au calcul d'affaiblissement DOP, peut ensuite déduire/déterminer, si la géométrie le permet, les positions futures du satellite (virtual TRPs ou vTRPs) offrant une précision optimale.

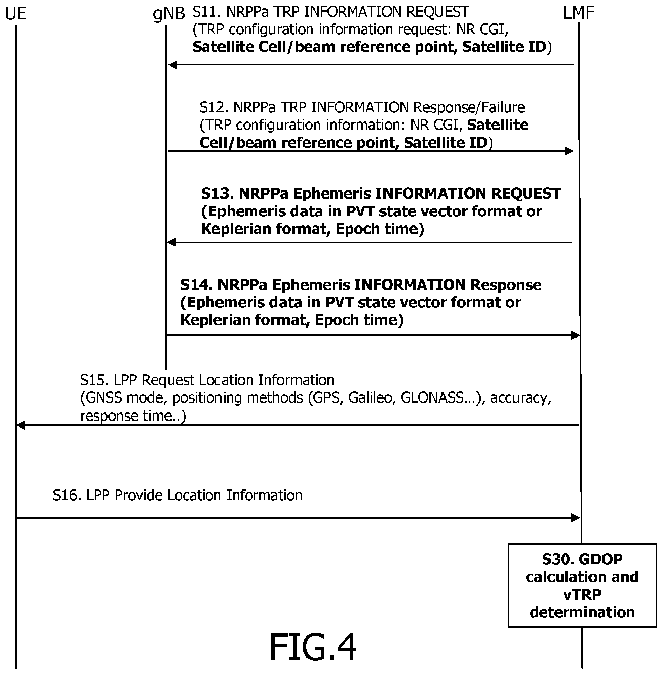

Selon une autre implémentation, la fonction LMF reçoit les éphémérides de la NG-RAN/gNB/TRP et calcule l'affaiblissement DOP. La figure 4 illustre cette implémentation.

Lors de l'étape S3a, la fonction LMF demande avantageusement des données d'assistance au noeud N (NG-RAN). Les données d'assistance peuvent comprend un identifiant de cellule, un point de référence virtuel de la cellule qui est avantageusement le centre de la cellule formée au sol par le satellite concerné, un identifiant du satellite servant le terminal UE en plus des éphémérides.

Le point de référence virtuel de la cellule où se trouve le terminal UE est choisi en positionnement de référence du terminal selon une implémentation particulière de l'invention.

La fourniture des éphémérides permettant la réalisation du procédé de l'invention par la fonction LMF est illustrée sur la figure 4. Sur cette figure et les deux suivantes, les caractéristiques originales de l'invention sont insérées dans les étapes des protocoles existants LPP et NRPPa. Les éléments originaux de l'invention sont montrés en caractères gras. Ainsi la fonction LMF, dans une étape S11, envoie un message au noeud gNB demandant la configuration d'un point TRP, cette configuration comprenant au moins un identifiant de cellule ou un point de référence représentant le positionnement supposé du terminal et au moins un identifiant de satellite.

Dans une étape S12, la station de base gNB répond en indiquant les informations requises.

Dans une étape S13, la fonction LMF requiert la fourniture d'éphémérides selon un format qui lui convient, ici selon un format « PVT state vector » ou un format Keplerian, ainsi que l'« Epoch time » associé aux éphémérides, cette dernière donnée indiquant leur instant de validité.

A l'étape S14, la fonction LMF reçoit la réponse du noeud gNB comprenant les informations requises, soit les éphémérides et l'« Epoch time ». Elle peut alors procéder aux étapes connues S15 et S16 de requête du positionnement tel que connu par le terminal UE et de réponse comprenant ce positionnement annoncé par le terminal UE. On note ici que, selon l'invention, la fonction LMF peut utiliser ce positionnement annoncé par le terminal UE et/ou le point de référence indiqué par la station de base par le message S12 pour définir le positionnement du terminal utilisé pour réaliser des prédictions d'affaiblissement de précision selon l'invention.

A partir des éphémérides et du point de référence ou du positionnement annoncé par le terminal, la fonction LMF est alors en mesure d'effectuer l'étape originale S30 de calcul de prédictions d'affaiblissement de précision pour plusieurs points de transmission radio TRP du ou des satellites.

Selon une autre implémentation particulière de l'invention, lors de l'étape S3b de la figure 2 (correspondant aussi à l'étape S15 de la figure 4), la fonction LMF demande au terminal UE, via le protocole LPP (LTE Positioning Protocol TS 37.355), de fournir son positionnement GNSS. On note ici que cette étape pourrait aussi avoir lieu avant l'étape S3a. Avec cette implémentation, le positionnement GNSS fourni par le terminal UE définit le positionnement de référence du terminal UE.

Outre le positionnement de référence du terminal UE, la fonction LMF a besoin de déterminer sur la trajectoire future du satellite, plusieurs ensembles de positions d'au moins trois points de transmission radio virtuels vTRPs pour permettre la localisation du terminal UE avec la procédure Multi-RTT. Les ensembles de positions sont distingués les uns des autres par un intervalle ou des intervalles de temps entre les mesures distinctes. La fonction LMF calcule alors l'affaiblissement de précision DOP pour chaque ensemble de positions.

En comparant les DOP obtenus, il déduit l'intervalle ou les intervalles de temps optimal ou optimaux entre au minimum trois mesures de façon à obtenir un DOP optimal.

Dans un mode de réalisation amélioré, les calculs de DOP sont effectués potentiellement deux fois pour chaque ensemble d'instants de mesure/positions du ou des satellites de mesure en prenant le positionnement annoncé par le terminal UE et en prenant aussi un point de référence dans la cellule formée au sol par le faisceau du satellite. Dans certains cas, cela peut permettre de valider que le terminal UE est vraiment dans une cellule suspectée ou que le terminal UE se déplace vers le point de référence. Le but de l'optimisation de l'affaiblissement DOP est de maximiser la précision de la localisation. Cette optimisation dépend de la géométrie du réseau d'accès par rapport à la position de l'UE.

Dans le cas où plusieurs satellites sont en vue du terminal UE, la fonction LMF calcule des prédictions de valeurs de DOP impliquant plusieurs satellites. La prédiction est alors réalisée pour des prises de mesures de temps aller-retour réalisées simultanément pour les satellites ou réalisées à plusieurs instants distincts (par un seul ou plusieurs satellites). Ainsi, la fonction LMF pourra déterminer l'instant optimal où la géométrie permet un DOP minimal.

Dans le cas multi-satellite, on peut donc associer une position prédite future par satellite. Dans une alternative de cette invention, l'utilisation conjointe de positions prédites pour plusieurs satellites pour un même instant avec des positions prédites pour un des satellites au moins pour plusieurs instants est aussi envisageable.

S'il n'existe pas d'instant de mesures qui permet d'obtenir un affaiblissement DOP satisfaisante, par exemple si le satellite a déjà franchi la verticale correspondant au terminal dans le plan d'orbite, alors la fonction LMF informe la fonction AMF dans le message « location service response » que la vérification de position est impossible.

S'il existe une solution optimale d'instants de mesures qui permet d'obtenir un affaiblissement DOP satisfaisante, par exemple si le satellite n'a pas déjà franchi la verticale correspondant au terminal dans le plan d'orbite, alors la fonction LMF peut éventuellement informer la fonction AMF dans le message « location service response » de l'étape S4 que la vérification de position est possible et éventuellement que cette vérification aura lieu plus tard si plusieurs instants de mesure nécessaires. Alternativement, la fonction LMF peut éventuellement indiquer à la fonction AMF une estimation de la précision de la mesure en utilisant l'affaiblissement DOP ou le résultat de plusieurs informations consécutives/successives de précision de la mesure acceptables, après un traitement statistique comme le calcul d'une variance ou d'une moyenne DOP selon l'état de l'art.

S'il existe des instants de mesures optimum, e.g. maximisant la précision de la localisation, mais accessible à long terme, optionnellement, la fonction LMF peut indiquer à la fonction AMF le temps nécessaire à la réalisation des mesures à venir. Cette opération peut servir par exemple à la fonction AMF dans le but de ne pas rejeter le terminal du réseau si la localisation n'a pas pu être vérifiée par le réseau. En même temps, cette information est utile pour déterminer si à long terme et dans combien de temps, en fonction de la géométrie du réseau d'accès et potentiellement du caractère mobile ou non du terminal, la position du terminal pourrait être vérifiée par le réseau.

La fonction LMF indique aux gNB/NG-RAN node, e.g. par le protocole NRPPa, et au terminal UE, e.g. par le protocole LPP, la série des instants de mesure dans le cas d'un seul satellite. Cette information est utilisée par le noeud N (NG-RAN) station de base pour configurer les remontées de mesures d'une façon apériodique.

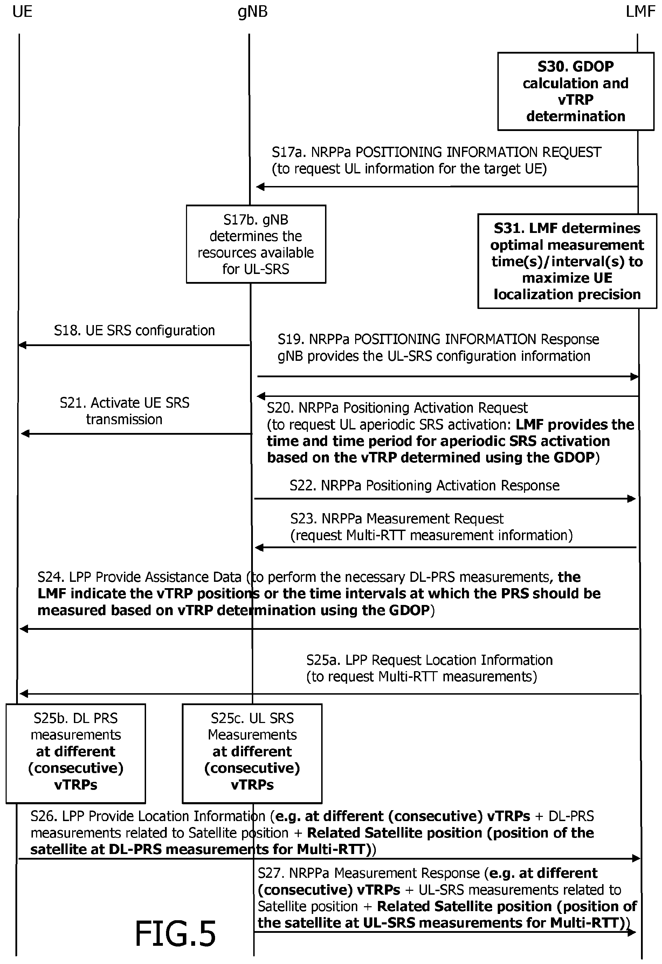

Cela signifie que le noeud N gNB et le terminal UE sont configurées ainsi qu'indiqué par les messages/étapes S20 à S24 sur la figure 5 décrite en détail dans la suite, pour faire les mesures multi-RTT seulement lors du passage du satellite par les positions des vTRPs, soit des positions futures, virtuelles.

Suite à cette configuration, le réseau NG-RAN remonte les mesures multi-RTT à la fonction LMF via le protocole NRPPa, e.g. avec le message de l'étape S27. Le UE remonte, lui, les mesures multi-RTT à la fonction LMF via le protocole LPP, e.g. dans le message de l'étape S26.

Cette configuration va concerner la même cellule à des instants différents si la vérification est réalisée avec une seule cellule fixe au sol et un seul satellite en vue.

Cette configuration concerne aussi potentiellement plusieurs cellules à des instants différents dans le cas des cellules défilantes au sol si la vérification est réalisée avec un seul satellite en vue ou plusieurs cellules à des instants simultanés si plusieurs satellites sont en vue pour effectuer la mesure.

La fonction LMF va ensuite fournir les résultats de mesures, e.g. si demandé par la fonction AMF, par une entité 5G LCS, ou un autre type d'entité, c'est-à-dire la position estimée du terminal, et autres paramètres comme par exemple la précision de mesure ainsi qu'illustré par l'étape S5a sur la figure 2.

La figure 5 illustre le premier mode de réalisation préféré où les calculs de prédiction des valeurs d'affaiblissement selon l'invention sont effectués par la fonction LMF. Les étapes de ce mode de réalisation sont insérées dans le protocole de dialogue entre la fonction LMF et le noeud gNB. Ainsi pendant la réalisation des étapes S17a, S17b requérant des informations sur les ressources disponibles en lien montant, la fonction LMF détermine les instants et/ou intervalles de prises de mesures de temps aller-retour pour maximiser la précision de la localisation.

Après que les ressources en lien montant soient renseignées dans des étapes S18 et S19, la fonction LMF requiert une activation apériodique de Sounding Référence Signals (SRS), signaux pilotes transmis par le UE en UpLink (UL, voie montante) par des étapes S20 et S21. L'invention permet que cette activation soit basée sur les instants/intervalles de mesures optimaux définis dans l'étape S31.

L'activation est validée dans une étape S22 puis, dans une étape S23, la fonction LMF requiert des informations de mesure et l'exécution d'une procédure Multi-RTT auprès du noeud gNB. Dans une étape S24, la fonction LMF assiste le terminal UE dans la procédure, e.g. pour déterminer les instants de mesure multi-RTT PRS, signaux pilotes transmis par le noeud gNB en voie descendante (DL : DownLink en anglais). Selon l'invention, les informations des instants et intervalles de mesures sont insérés dans les données d'assistance. Dans une étape S25a, la procédure Multi-RTT est requise puis effectuée dans des étapes S25b et S25c. Avec l'invention, ces mesures sont faites à des instants précis documentés dans les données d'assistance envoyées au terminal dans l'étape S24. Enfin, des étapes S26 et S27 sont réalisées, de la part respectivement du terminal UE et du noeud gNB, pour différents instants et intervalles selon l'invention pour fournir à la fonction LMF les résultats des mesures et permettre la détermination ou la vérification du positionnement du terminal. Les positions correspondantes du ou des satellites sont aussi fournies. Il s'agit des mesures multi-RTT sur les pilotes DL-PRS pour l'étape S26 et des mesures multi-RTT sur les pilotes UL-SRS pour l'étape S27, pour plusieurs positions d'un ou de plusieurs satellites. Cela permet à la fonction LMF de déterminer les sphères/ellipsoïdes de la figure 3.

Dans le rapport de mesure, les positions/instants réel(le)s pour les satellites sont disponibles par défaut. Néanmoins, la fonction LMF configure les PRS/SRS pour une position optimale d'un ou plusieurs satellites et donc il connait leurs positions lors des mesures comme étant celles indiquées comme optimales selon l'invention. Ces valeurs pourraient donc ne pas être de nouveau renvoyées à la fonction LMF.

Dans un second mode de réalisation, les calculs sont réalisés par la fonction de gestion du positionnement LMF.

Un prérequis à la réalisation de l'invention est, selon une première implémentation du second mode de réalisation, que le réseau NG-RAN soit connecté au satellite Network Control Center (Satellite NCC) pour disposer des éphémérides de la constellation pour calculer l'affaiblissement DOP. Ainsi le réseau, grâce au calcul d'affaiblissement DOP, déduit, si la géométrie le permet, les positions futures du satellite optimales pour la prise de mesures multiples de temps aller-retour dans le cas d'un seul satellite en vue.

Dans le cas où plusieurs cellules formées au sol par une pluralité de satellites sont disponibles, un noeud gNB, e.g. de desserte, reçoit les éphémérides des autres gNBs/TRPs, e.g. voisins, et calcule l'affaiblissement DOP pour plusieurs instants à venir afin de déterminer un instant optimal où le volume obtenu par les positions simultanées des satellites est maximal.

Dans cette implémentation, lors de l'étape S3a de la figure 2, le réseau NG-RAN fournit avantageusement des données d'assistance, typiquement un identifiant de cellule, un point de référence de la cellule, e.g. le centre du faisceau/cellule qui définit un point de référence virtuel, un identifiant du satellite servant le terminal UE, et éventuellement les éphémérides à la fonction LMF.

Selon une première situation pour l'étape S3a définie sur la figure 3, le réseau NG-RAN connait le positionnement du terminal UE. A l'étape S3b, la fonction LMF demande alors au terminal, via le protocole LPP, de fournir son positionnement GNSS. De nouveau cette étape pourrait avoir lieu avant l'étape S3a.

La fonction LMF fournit au réseau NG-RAN le positionnement GNSS du terminal UE, e.g. via NRPPa, ou le réseau NG-RAN utilise directement l'information GNSS envoyée par le terminal UE vers le réseau NG-RAN dans un message L2/L3 type Message 3 défini dans les textes standardisés.

Dans une autre situation, le réseau NG-RAN ne connait pas le positionnement du terminal UE. Le réseau NG-RAN/gNB sait seulement qu'un terminal UE, éventuellement avec un identifiant du terminal UE type, e.g. GUTI/RNTI/SUCI, se trouve dans une cellule/un faisceau, ou le réseau NG-RAN/gNB connait tout simplement un point de référence de la cellule, typiquement le centre du faisceau/cellule définissant un point de référence virtuel et considère que le terminal UE se trouve proche du centre du faisceau.

Dans toutes les situations, le réseau NG-RAN/gNB détermine sur la trajectoire future du satellite, les positions des points de transmission radio virtuels (au moins trois pour permettre la localisation du terminal UE avec la procédure Multi-RTT avec un satellite en vue) et l'intervalle (ou les intervalles) de temps optimal (ou optimaux) entre au minimum 3 mesures de façon à obtenir un affaiblissement DOP optimale. Le but de l'optimisation d'affaiblissement DOP est de maximiser la précision de la localisation, car cette optimisation dépend de la géométrie du réseau d'accès par rapport à un point de référence pour le terminal, si e.g. le UE est supposé être dans un point de référence de la cellule, i.e. le centre du faisceau/cellule définissant le point de référence.

Ici, le réseau NG-RAN/gNB, grâce au calcul d'affaiblissement DOP, déduit les points de transmission radio optimaux si la géométrie le permet. Par la suite, éventuellement, le réseau NG-RAN assiste la fonction LMF avec des informations sur la précision de la mesure donnée par l'affaiblissement DOP, et/ou le temps nécessaire à la réalisation des mesures à venir.

Plus précisément, s'il existe une solution optimale de mesures qui permet d'obtenir un affaiblissement DOP satisfaisant, par exemple si le satellite n'a pas déjà franchi la verticale correspondant au terminal dans le plan d'orbite, alors le réseau NG-RAN/gNB peut éventuellement informer la fonction LMF dans un message «NRPPa POSITIONING INFORMATION Response» que la vérification de position est possible. Alternativement, le réseau NG-RAN/gNB peut éventuellement indiquer à la fonction LMF une estimation de la précision de la mesure en utilisant l'affaiblissement DOP. La fonction LMF peut éventuellement transférer cette information, ou le résultat de plusieurs informations consécutives/successives, après un traitement statistique comme le calcul d'une variance ou d'une moyenne d'affaiblissement DOP à la fonction AMF dans un « location service response ».

S'il n'existe pas d'instant de mesures qui permet d'obtenir un affaiblissement DOP satisfaisante, par exemple si le satellite a déjà franchi la verticale correspondant au terminal dans le plan d'orbite, alors le NG-RAN/gNB informe la fonction LMF dans un message «NRPPa POSITIONING INFORMATION Response» que la vérification de position est impossible.

S'il existe des instants de mesures optimum, e.g. pour maximiser la précision de la localisation, optionnellement le réseau NG-RAN/gNB indique à la fonction LMF le temps nécessaire à la réalisation des mesures à venir. Cette opération pourrait servir par exemple à la fonction LMF pour informer éventuellement la fonction AMF dans un message « location service response », e.g. pour ne pas rejeter l'UE du réseau si la localisation n'a pas pu être vérifiée par le réseau. En même temps, cette information est utile pour déterminer si, à long terme et dans combien de temps, en fonction de la géométrie du réseau d'accès et potentiellement de la mobilité du terminal, la position du terminal pourrait être vérifiée par le réseau.

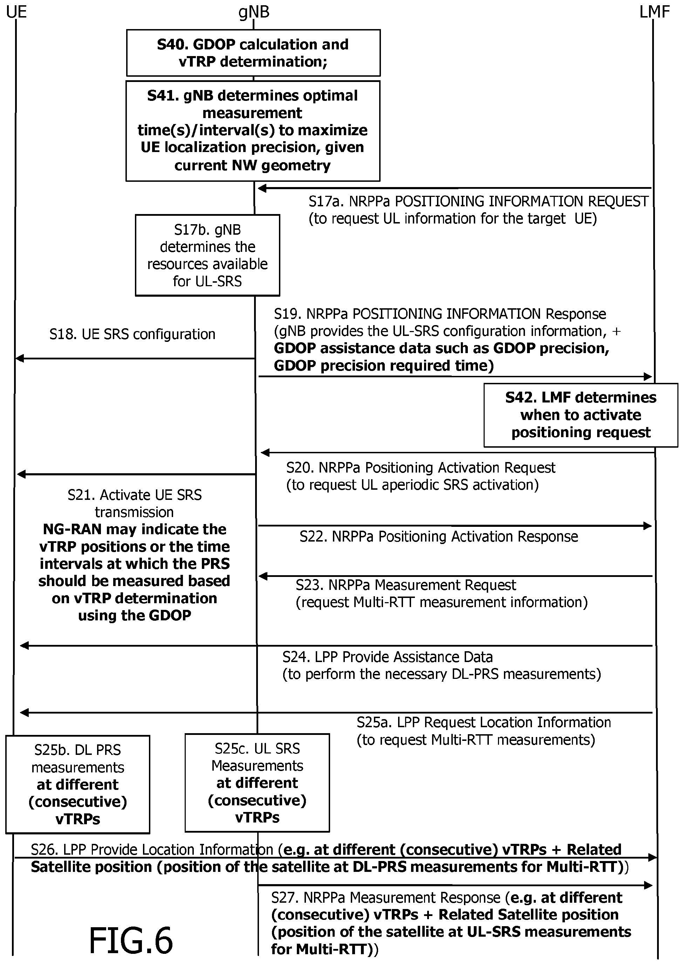

Si un affaiblissement DOP prédit est satisfaisant, la fonction LMF détermine quand il faut activer les prises de mesure pour déterminer le positionnement du terminal. Dans ce cas, le noeud gNB, qu'il s'agisse d'une cellule au sol ou d'une pile gNB implémentée en tout ou partie dans un satellite régénératif, et le terminal UE seront configurés, comme indiqués par les messages des étapes S20 à S24 de la figure 6, pour faire les mesures multi-RTT. Suite à cette configuration, le réseau NG-RAN remonte les mesures multi-RTT à la fonction LMF via le protocole NRPPa, e.g. avec un message selon l'étape S27. Le terminal, quant à lui, remonte les mesures multi-RTT à la fonction LMF via le protocole LPP, e.g. avec un message de l'étape S26.

Cette configuration va concerner la même cellule si la vérification est réalisée avec une seule cellule, c'est-à-dire à des instants différents ou dans le cas de cellules fixes au sol.

Cette configuration concerne aussi potentiellement plusieurs cellules dans le cas des cellules défilantes au sol si la vérification est réalisée avec plusieurs cellules à des instants simultanés ou si plusieurs satellites sont en vue pour effectuer la mesure. On note ici que la mesure multi-RTT est susceptible d'être lancée de suite dans le cas où la prédiction d'affaiblissement de position PDOP avec trois satellites au moins est trouvée satisfaisante vis-à-vis d'un seuil maximal acceptable de PDOP, typiquement un seuil de PDOP maximal de 160 si l'on considère une erreur de mesure de RTT de 200ns. Autrement dit, un PDOP acceptable doit être inférieur à 160.

De manière plus détaillée, la précision sur la position se calcule comme suit : erreur de position résultante = PDOP x erreur de mesure RTT.

En considérant le cas où une erreur temporelle de mesure RTT de 200ns résulte en une erreur géométrique de mesure RTT de 60m, pour localiser un terminal avec 10km de précision = 10 000m, on doit donc avoir une erreur de position résultante maximale de 10 000 m = PDOP x 60m.

Le PDOP maximal sera donc de 166 dans ce cas. Une telle valeur est illustrative et pourra bien entendu être différente pour d'autres cas d'usage et/ou d'autres types d'orbite. Dans certains cas d'usage, un calcul d'un des autres indicateurs d'affaiblissement de précision géométrique GDOP, HDOP, VDOP, TDOP sera plutôt utilisé avec un seuil également adapté.

Dans ce cas, les instants de mesure ne seront pas considérés et la mesure simultanée avec les satellites sera faite sans décalage dans le temps.

Dans des réalisations plus avancées de l'invention, plusieurs prédictions DOP étant calculées pour plusieurs instants ou pour plusieurs durées d'intervalles de temps entre les prises de mesure, la comparaison entre les prédictions permettra de déterminer un instant optimal, i.e. pour lancer les mesures instantanées avec trois satellites, ou des instants optimaux, typiquement pour lancer, à des intervalles optimaux, (au moins) trois mesures RTT avec un seul et même satellite.

La fonction LMF va fournir les résultats de mesures, e.g. si demandé par la fonction AMF, 5G LCS, ou une autre entité, c'est-à-dire la position estimée du terminal, et autres paramètres comme par exemple la précision de mesure.

Alternativement, au niveau de l'étape S18 ou dans une autre étape, gNB peut indiquer les ressources PRS au terminal UE, ou peut informer le terminal UE avec les PRS à mesurer. Avec cette implémentation possible, ces mesures sur les PRS sont faites à des instants précis documentés dans les données d'assistance envoyées au terminal dans l'étape S18.

La figure 6 montre schématiquement le second mode de réalisation où le noeud gNB, soit le réseau, est responsable des calculs de prédiction d'affaiblissement selon l'invention.

Ici, dans une étape S40, le réseau d'accès détermine plusieurs instants de mesures ou intervalles virtuels et calcule les prédictions d'affaiblissement de précision correspondants. Il détermine ensuite dans une étape S41 les instants et/ou intervalles optimaux de mesure pour lesquels un affaiblissement minimal est attendu. Les même étapes S17a, S17b et S18 décrites dans la figure 5 sont effectuées. En réponse à la requête d'information sur le lien montant, le réseau d'accès répond en envoyant des données d'assistance relative à la précision de mesure à la fonction LMF dans l'étape S19 en plus des données relatives au lien montant. Cela permet à la fonction LMF de déterminer dans une étape S42 le moment où activer les requêtes d'activation de la détermination/vérification de positionnement envoyées dans une étape S20. L'activation réalisée à l'étape S21 par le noeud gNB auprès du terminal UE comprend alors avantageusement des informations sur les instants et intervalles auxquels les mesures doivent être réalisées selon l'optimisation de l'affaiblissement proposée par l'invention. Alternativement, au niveau de l'étape S18 ou dans une autre étape, gNB peut indiquer les ressources PRS au terminal UE, ou peut informer le terminal avec les PRS à mesurer. Avec cette implémentation possible, ces mesures sur les PRS sont faites à des instants précis documentés dans les données d'assistance envoyées au terminal dans l'étape S18.

Les étapes S22 et S23 de réponse d'activation puis de requête d'informations sur les mesure Multi-RTT sont alors effectuées. Dans les étapes S24 et S25a préalablement connues, la fonction LMF requiert des informations pour la réalisation des mesures Multi-RTT auprès du terminal UE ainsi que la réalisation des prises de mesures.

Les prises de mesure sont alors effectuées dans les étapes S25b et S25c pour les instants et/ou intervalles spécifiques tels que déterminés par le réseau. Les étapes S26 et S27 sont aussi réalisées avec les mesures effectuées/les rapports de mesure pour ces instants et/ou intervalles spécifiques. Les positions correspondantes du ou des satellites sont ainsi fournies. Il s'agit des mesures multi-RTT sur les pilotes DL-PRS pour l'étape S26 et des mesures multi-RTT sur les pilotes UL-SRS pour l'étape S27, pour plusieurs positions d'un ou de plusieurs satellites. Cela permet à la fonction LMF de déterminer les sphères/ellipsoïdes de la figure 3.

En résumé, l'invention répond notamment au cas où le coeur de réseau cherche à vérifier la localisation du terminal avant d'accorder des services lorsque le terminal est connecté, conformément au comportement spécifié dans la TS 23.501.

Le réseau calcule alors des prédictions d'affaiblissement de précision DOP en se basant sur (une ou plusieurs) des informations suivantes :
∘ La position GNSS du terminal et/ou d'un point de référence, e.g. typiquement le centre du faisceau du satellite quand un seul satellite est en vue ou le centre éventuellement pondéré des faisceaux de plusieurs satellites quand plusieurs satellites sont en vue ;
∘ Les données d'éphémérides de la constellation.
∘ Les positions futures des différents satellites si plusieurs satellites sont en vue, et/ou
∘ Les positions futures successives du satellite servant (vTRPs) sur son orbite si tel est le cas,

Si une bonne géométrie, i.e. reliant le terminal et les points d'ancrage de positionnement que sont les positions futures prédites du ou des satellites, est trouvée, le réseau déclenche des procédures multi-RTT, i.e. des mesures RTT ou des mesures faites par le terminal en lien descendant (DownLink DL) sur typiquement les signaux PRS (Positioning Référence Signals), et/ou les mesures faites par les gNBs/NG-RAN en lien montant (UpLink UL) sur typiquement les signaux SRS (Sounding Référence Signals). Cela permet de vérifier ou déterminer la localisation du terminal et de fournir les positions des satellites au NG-RAN/UE, i.e. des mesures faites par le UE en DL, et/ou les mesures faites par les gNBs/NG-RAN en UL.

Cela signifie qu'il est possible de déterminer des positions de satellite appropriés pour le positionnement qui fournissent des valeurs de DOP plus faibles, ce qui assure une précision maximale du positionnement.

Si la diffusion de précision DOP calculée représente un niveau de précision supérieur au minimum approprié pour prendre une décision précise, donc suffisante pour la vérification de la localisation du terminal, le réseau envoie les instructions de mesures multiples de temps aller-retour à l'instant optimal (cas où plusieurs satellites sont en vue) et/ou aux instants optimaux (cas où moins de trois satellites sont en vue) et effectue la vérification de la localisation du terminal.

En revanche, si la diffusion DOP calculée est élevée, la vérification du positionnement du terminal ne peut pas être effectuée avec une précision suffisante. Par conséquent, le réseau n'effectue pas la vérification du positionnement du terminal et informe simplement la fonction de gestion d'accès et de mobilité que la diffusion de précision est trop importante et la vérification hors de portée.

Dans la description détaillée ci-dessus, il est fait référence aux dessins annexés qui montrent, à titre d'illustration, des modes de réalisation spécifiques dans lesquels l'invention peut être mise en oeuvre. Ces modes de réalisation sont décrits de manière suffisamment détaillée pour permettre à l'homme du métier de mettre en pratique l'invention. La description détaillée ci-dessus ne doit donc pas être prise dans un sens limitatif, et la portée de la présente invention est définie uniquement par les revendications annexées, interprétées de manière appropriée.

## Revendications

1. Procédé de gestion de la détermination du positionnement d'un terminal de communication ayant au moins un satellite non géostationnaire en vue et paraissant présent auprès d'un noeud de réseau, le procédé comprenant les étapes de, pour une entité du réseau :
- détermination d'un positionnement de référence du terminal ;
- calcul d'au moins une prédiction d'affaiblissement de précision calculée en fonction de données d'éphémérides du ou des satellites concernés pour au moins un instant à venir et du positionnement de référence du terminal ;
- comparaison de la prédiction d'affaiblissement avec un seuil maximal ;
- déclarer la détermination du positionnement non accessible en cas d'affaiblissement de précision prédit supérieur au seuil maximal ;
- sinon, envoyer au noeud de réseau et au terminal des instructions d'exécution d'une procédure de mesures multiples de temps aller-retour à l'instant à venir.

2. Procédé de gestion de la détermination du positionnement d'un terminal de communication selon la revendication 1, dans lequel la prédiction d'affaiblissement de précision est la prédiction d'affaiblissement de précision de position.

3. Procédé de gestion de la détermination du positionnement d'un terminal de communication selon l'une des revendications 1 et 2, l'étape de calcul comprenant le calcul de plusieurs prédictions d'affaiblissement de précision, les prédictions étant calculées en fonction de données d'éphémérides du ou des satellites concernés pour un ou plusieurs instants à venir et du positionnement de référence, le procédé comprend les étapes de :
- comparaison des prédictions d'affaiblissement de précision entre elles et avec le seuil maximal ;
- déclarer la détermination du positionnement non accessible en cas d'affaiblissements de précision prédits tous supérieurs au seuil maximal ;
- sinon, déterminer un ou plusieurs instants à venir offrant un affaiblissement de précision minimale ;
- envoyer au noeud de réseau et au terminal des instructions d'exécution d'une procédure de mesures multiples de temps aller-retour à l'instant ou les instants déterminés.

4. Procédé selon la revendication 3, dans lequel, au moins trois satellites étant en vue du terminal, l'étape de calcul comprend le calcul de plusieurs prédictions d'affaiblissement de la précision réalisées pour plusieurs instants différents de mesures de temps aller-retour simultanées auprès d'au moins un triplet de satellites en vue du terminal, les instants différents de mesures différentiant les prédictions entre elles.

5. Procédé selon la revendication 3, dans lequel, un satellite étant en vue du terminal, les prédictions sont calculées pour trois instants de mesures de temps aller-retour séparés par plusieurs intervalles de temps différents, les intervalles de temps différents différentiant les prédictions entre elles.

6. Procédé selon l'une des revendications précédentes, dans lequel l'étape de détermination d'un positionnement de référence comprend une sous-étape de récupération d'un positionnement annoncé par le terminal, la détermination du positionnement de référence étant réalisée en fonction de ce positionnement annoncé.

7. Procédé selon l'une des revendications 1 à 5, dans lequel l'étape de détermination d'un positionnement de référence comprend une sous-étape de choix d'un satellite dans le faisceau duquel le terminal est supposé être présent et une sous-étape de détermination du centre de la cellule formée au sol par le faisceau, ce centre de la cellule définissant le positionnement de référence du terminal.

8. Entité de réseau adaptée à l'implémentation d'un procédé de gestion de la détermination du positionnement d'un terminal de communication ayant au moins un satellite non géostationnaire en vue et paraissant présent auprès d'un noeud de réseau selon l'une des revendications précédentes, l'entité de réseau, étant apte à déterminer un positionnement de référence du terminal, comprend un module de calcul d'au moins une prédiction d'affaiblissement de précision calculée en fonction de données d'éphémérides du ou des satellites concernés pour au moins un instant à venir et du positionnement de référence du terminal et un module de décision d'envoi au terminal d'instructions d'exécution d'une procédure de mesures multiples de temps aller-retour à au moins un instant à venir, le module de décision étant apte à comparer la prédiction d'affaiblissement avec un seuil maximal, à déclarer la détermination du positionnement non accessible en cas d'affaiblissement de précision prédit supérieur au seuil maximal et, sinon, à déclencher l'envoi au noeud de réseau et au terminal des instructions d'exécution d'une procédure de mesures multiples de temps aller-retour à l'instant à venir.

9. Entité de réseau selon la revendication 8, **caractérisé en ce que** la prédiction d'affaiblissement de précision est la prédiction d'affaiblissement de précision de position.

10. Entité de réseau selon l'une des revendications 8 et 9, le module de calcul étant apte à calculer plusieurs prédictions d'affaiblissement de précision, les prédictions étant calculées en fonction de données d'éphémérides du ou des satellites concernés pour un ou plusieurs instants à venir et du positionnement de référence, le module de décision étant, quant à lui, apte à comparer des prédictions d'affaiblissement de précision entre elles et avec le seuil maximal, à déclarer la détermination du positionnement non accessible en cas d'affaiblissements de précision prédits tous supérieurs au seuil maximal et, sinon, à déterminer un ou plusieurs instants à venir offrant un affaiblissement de précision minimale, et à déclencher l'envoi au noeud de réseau et au terminal des instructions d'exécution d'une procédure de mesures multiples de temps aller-retour à l'instant ou les instants déterminés.

11. Entité de réseau selon l'une des revendications 8 à 10, cette entité de réseau appartenant au coeur de réseau.

12. Entité de réseau selon la revendication 11, cette entité étant une fonction de gestion du positionnement comprenant un module de réception, de traitement et de stockage d'éphémérides des satellites pour les fournir au module de calcul des prédictions d'affaiblissement.

13. Entité de réseau selon l'une des revendications 8 à 10, cette entité de réseau appartient au réseau d'accès.

14. Entité selon la revendication 13, l'entité de réseau étant un noeud de réseau NG-RAN.

15. Entité de réseau selon la revendication 13, le module de décision étant apte à déclencher l'envoi au noeud de réseau et au terminal des instructions d'exécution d'une procédure de mesures multiples de temps aller-retour, par envoi d'au moins l'instant à venir à une fonction de gestion de la localisation du coeur de réseau.
